# EUROPEAN PATENT SPECIFICATION

(11) **EP 2 330 660 B1**
(45) Date of publication and mention of the grant of the patent: **24.07.2013**
(21) Application number: 10193949.4
(22) Date of filing: 07.12.2010
(51) Int. Cl.: H01M 2/26, H01M 2/18, H01M 2/34

(54) **Rechargeable battery**
Wiederaufladbare Batterie
Batterie rechargeable

(30) Priority: 07.12.2009 US 267354 P; 07.05.2010 KR 20100042961; 02.12.2010 US 959328
(43) Date of publication of application: 08.06.2011
(73) Proprietor: Samsung SDI Co., Ltd., Gyeonggi-do (KR); Robert Bosch GmbH, 70442 Stuttgart (DE)
(72) Inventor: Kim, Yong-Sam, Gyeonggi-do (KR); Cho, Kyu-Won, Gyeonggi-do (KR); Yoo, Soo-Kyoung, Gyeonggi-do (KR)
(74) Representative: Gulde Hengelhaupt Ziebig & Schneider

(56) References cited:
- KR-A- 20080 005 621
- US-A- 5 989 743
- US-A1- 2003 044 677
- US-A1- 2006 051 664
- US-A1- 2006 159 990

## Description

### Field of the invention

This disclosure relates to a rechargeable battery. More particularly, this disclosure generally relates to a rechargeable battery including a safety device.

### Description of the Related Art

A rechargeable battery can be recharged and discharged unlike a primary battery that cannot be recharged. A rechargeable battery with low capacity is used for a small portable electronic device such as a mobile phone, a laptop computer, and a camcorder, while a rechargeable battery with large capacity is used as a power source for driving a motor such as for a hybrid vehicle.

Recently, a large capacity high power rechargeable battery has been developed using a non-aqueous electrolyte with high energy density. The aforementioned rechargeable battery with large capacity is formed into a battery module with large capacity by coupling a plurality of these rechargeable batteries in series or in parallel in order to use it to drive a device, for example, a motor such as an electric vehicle requiring a large amount of electric power. The rechargeable battery may be fabricated to have a cylindrical shape, a prismatic shape, and the like. Examples of rechargeable batteries are disclosed in US 5,989,742 A, US 2006/0051664 A1, US 2006/0159990 A1, US 2003/0044677 A1 and KR 20060064161 A.

A prismatic rechargeable battery includes an electrode assembly including positive and negative electrodes and a separator therebetween, a case having a space in which the electrode assembly is located, a cap plate closing and sealing the case, and a terminal electrically connected to the electrode assembly and protruded through the cap plate out of the case.

When it is penetrated by a conductive foreign particle such as a nail, a drill, or the like, it may have a short circuit inside. The short circuit may sharply increase a temperature inside the rechargeable battery and provide a danger of firing or exploding it.

The above information disclosed in this Background section is only for enhancement of understanding of the background of the described technology and therefore it may contain information that does not form the prior art that is already known in this country to a person of ordinary skill in the art.

### SUMMARY

An exemplary embodiment of the present invention provides a rechargeable having improved safety by solving the aforementioned problem.

The present invention provides a rechargeable battery according to claim 1.

Further embodiments of the invention could be learned from the dependet claims.

### BRIEF DESCRIPTION OF THE DRAWINGS

FIG. 1 provides the perspective view of a rechargeable battery according to a first embodiment of the present invention.
FIG. 2 is the cross-sectional view of a rechargeable battery cut along the II - II line in FIG. 1.
FIG. 3 is an exploded perspective view showing an electrode assembly and a metal supporting plate according to the first embodiment of the present invention.
FIG. 4 is the horizontally cross-sectional view of members illustrated in FIG. 3, when combined.
FIG. 5 is a horizontally cross-sectional view showing a metal-supporting plate attached to an electrode assembly according to a second embodiment of the present invention.

### DETAILED DESCRIPTION

This disclosure will be described more fully hereinafter with reference to the accompanying drawings, in which exemplary embodiments of this disclosure are shown. In the specification and drawings, like reference numerals designate like elements.

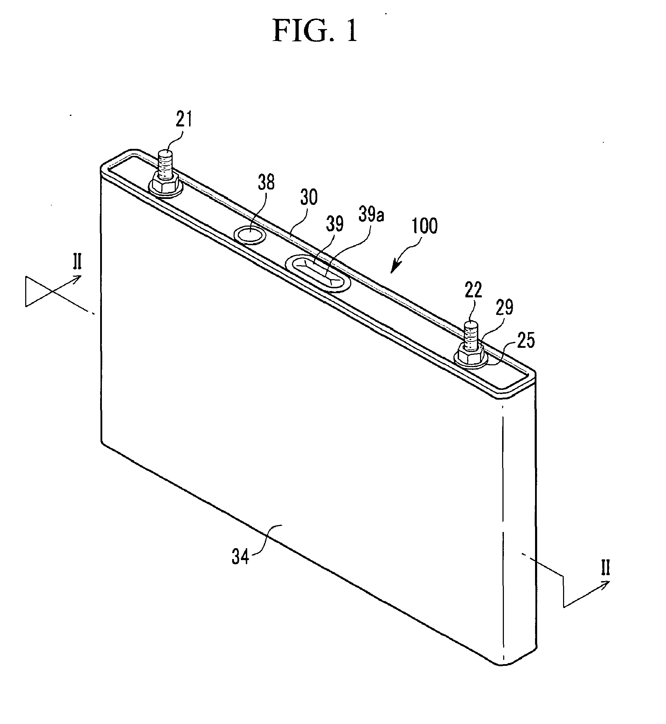

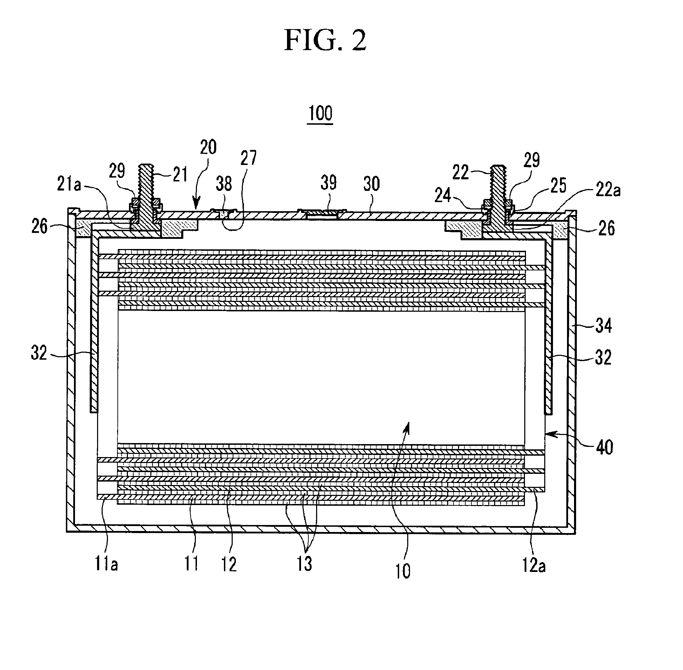

FIG. 1 is the perspective view of a rechargeable battery according to the first embodiment, while FIG. 2 is a cross-sectional view of the rechargeable battery cut along the line II - II .

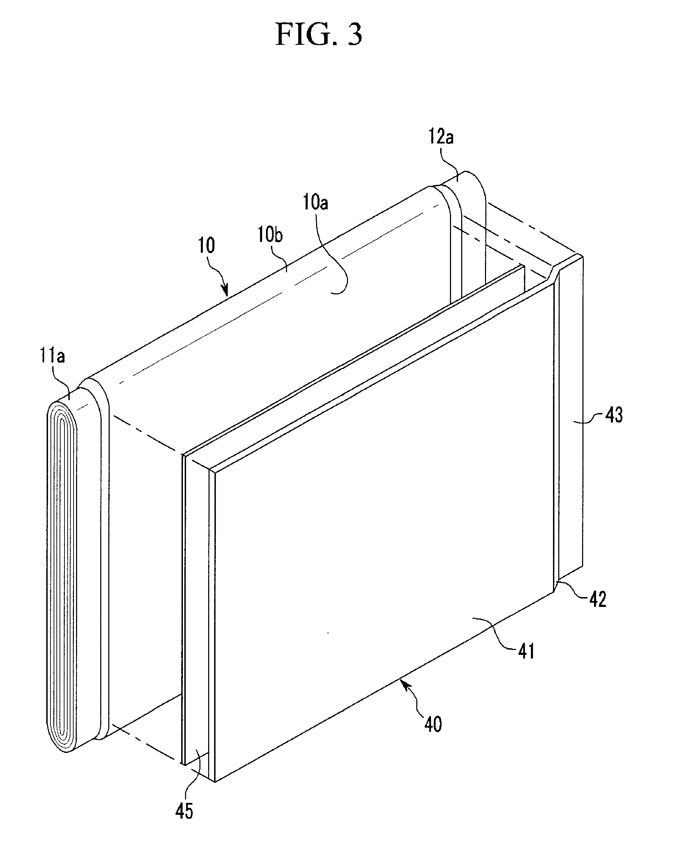

Referring to FIGS. 1 and 2, a rechargeable battery 100 according to a first embodiment of the present invention includes an electrode assembly 10 fabricated by winding positive and negative electrodes 11 and 12 and a separator 13 disposed therebetween, a case housing the electrode assembly 10, and a cap assembly 20 combined with the case 34. The electrode assembly 10 after winding comprises flat parts 10a formed at their front and back sides as shown in Fig. 3 and curved parts 10b at their top and bottom faces. The curved parts 10b connect the front and back flat parts 10a.

According to the first embodiment of the present invention, a rechargeable battery 100 will be illustrated as a prismatic lithium ion secondary battery. However, this disclosure of the present invention is not limited thereto but may be applied to various battery types such as a lithium polymer battery, or the like.

The positive and negative electrodes 11 and 12 include a coating region prepared by coating a current collector made of a thin metal foil plate with an active material and uncoated regions 11a and 12a not coated with the active material.

The positive uncoated region 11a is formed at one end of the positive electrode 11 along the length direction, while the negative uncoated region 12a is formed at the other end of the negative electrode 12 along the length direction. Next, the positive and negative electrodes 11 and 12 and the separator 13 therebetween as an insulator were spiral-wound. In addition, the electrode assembly 10 may be supported outside by a finishing tape (not shown) to support the shape.

The case 34 has a cuboid shape at large and an opening at one side. The cap assembly 20 includes a cap plate 30 covering the opening of the case 34, a positive terminal 21 protruded out of the cap plate 30 and electrically connected to the positive electrode 11, a negative terminal 22 protruded out of the cap plate 30 and electrically connected to the negative electrode, and a vent member 39 equipped with a notch 39a that can be broken depending on a predetermined internal pressure.

The cap plate 30 is made of a thin plate and includes an electrolyte injection opening 27 for implanting an electrolyte solution at one side and a sealing cover 38 for the electrolyte injection opening 27.

Between the cap plate 30 and terminals 21 and 22 is installed a gasket 25 to insulate the cap plate 30 and the terminals 21 and 22. The terminals 21 and 22 include a positive terminal 21 and a negative terminal 22. The gasket 25 is fit into the terminal hole. In other words, it is made of two pieces and respectively positioned closely adjacent to top and bottom of the terminal hole.

The terminals 21 and 22 have a circular cylinder shape and a screw thread on the external circumference where a nut can be combined together. They are combined with a nut 29 on top. They may further include a washer 24 between the nut 29 and the gasket 25 to buffer their combining strength. On the other hand, the terminals 21 and 22 have terminal flanges 21a and 22a at the bottom to support themselves.

Between the terminal flanges 21 a and 22a and the cap plate 30 is installed a lower insulating member 26 for insulation. The terminals 21 and 22 are inserted into the lower insulating member 26. The terminal flanges 21 a and 22a are welded with a lead member 32 electrically connected to a positive electrode 11 or negative electrode 12. The terminal flanges 21 a and 22a and the lead member 32 are fit into a hole formed at the bottom of the lower insulating member 26.

In addition, a metal supporting plate 40 is welded into the negative uncoated region 12a to externally support the electrode assembly 10.

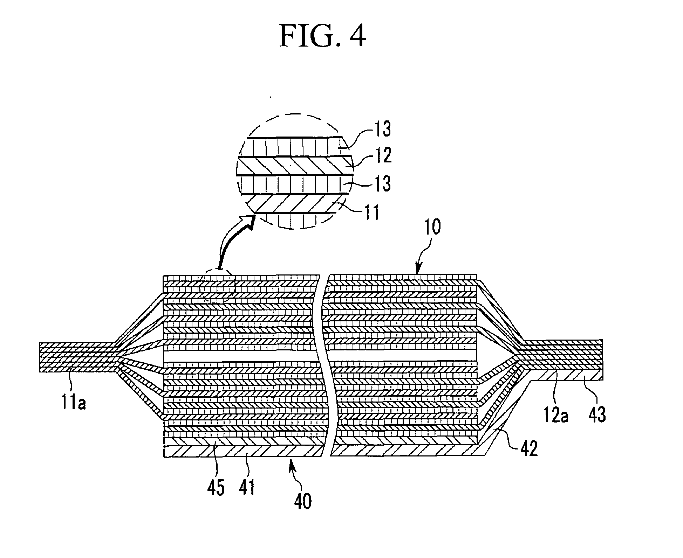

FIG. 3 is the exploded perspective view of the electrode assembly and the metal supporting plate according to the first embodiment of the present invention. FIG. 4 is the horizontally cross-sectional view of the above members shown in FIG. 3 when combined.

Referring to FIGS. 3 and 4, the metal supporting plate 40 according to the first embodiment of the present invention includes a flat part 41 facing the front flat part 10a of the electrode assembly 10, a curving slope part 42 formed at one end of the flat part 41 and curved toward an electrode assembly 10, and a junction part 43 formed at the end of the curving slope part 42 and electrically connected to the negative uncoated region 12a.

The metal supporting plate 40 is welded with the negative uncoated region 12a at the junction part 43 and made of the same material as the negative uncoated region 12a. According to the embodiment of the present, the metal supporting plate 40 is made of copper or copper alloy.

An insulating film 45 is disposed between the flat part 41 and the electrode assembly 10. The insulating film 45 is attached to the flat part 41 and prevents the electrode assembly 10 from being electrically connected to the flat part 41. It is made of a polymer material not reacting with an electrolyte solution.

Since uncoated regions 11 a and 12a of the electrode assembly 10 are thinner than the rest of the electrode assembly 10, the electrode assembly is tilted or stepped where the uncoated regions 11 a and 12a meet coated regions coated with an active material. The uncoated regions 11 a and 12a are welded together in order to efficiently withdraw a current accumulated therein with low resistances.

The curving slope part 42 in the metal supporting plate 40 contacts with the tilted negative uncoated region 12a and supports it. The junction part 43 bents toward the electrode assembly 10 through the curving slope part 42 and can be easily welded to the negative uncoated region 12a. The junction part 43 is disposed in parallel to the negative uncoated region 12a and welded with the negative uncoated region 12a. Accordingly, it can prevent the negative uncoated region 12a from being shaken due to external impact or vibration.

Since the negative uncoated region 12a is welded with the lead member 32, there may be a problem of bad contact between the negative uncoated region 12a and the lead member 32 if the negative uncoated region 12a is shaken from external impact or vibration. However, when the junction part 43 supports the negative uncoated region 12a as in the embodiment of the present invention, it may prevent bad contact between the uncoated region 12a and the lead member 32 due to external impact, vibration, or the like.

On the other hand, when a rechargeable battery 100 is penetrated by a conductive foreign particle such as a nail, a drill, or the like, the metal supporting plate 40 may be short-circuited to the positive electrode 11, discharging an accumulated current. In a comparative example, a metal supporting plate is attached to a positive uncoated region and tested whether the positive uncoated region is short-circuited to a negative electrode. As a result, a problem of ignition of an electrode assembly due to abrupt heat generation occurs where the supporting plate being electrically connected to a positive electrode contacts the negative electrode. In addition, when a metal supporting plate is not included in another comparative example, positive and negative electrodes are short-circuited and generate a lot of heat, igniting an electrode assembly 10 when a rechargeable battery is penetrated by a nail, a drill, and the like.

However, when a metal supporting plate 40 is connected to a negative electrode 12 according to the embodiment of the present invention and is short-circuited to a positive electrode 11 due to a nail penetrating a rechargeable battery 100 inside an electrode assembly 10, a current accumulated inside the electrode assembly 10 may be safely discharged without igniting the battery. The positive electrode 11 may be configured to connect electrically to the case 34, and thus the metal supporting plate 40 connected to the negative electrode 12 can be short-circuited to the case 34 connected to the positive electrode 11.

In this way, according to one embodiment of the present invention, a rechargeable battery 100 can improve safety by discharging a current and thus, removing a danger of firing when there is a danger of an explosion upon penetration of the battery 100 by a foreign particle.

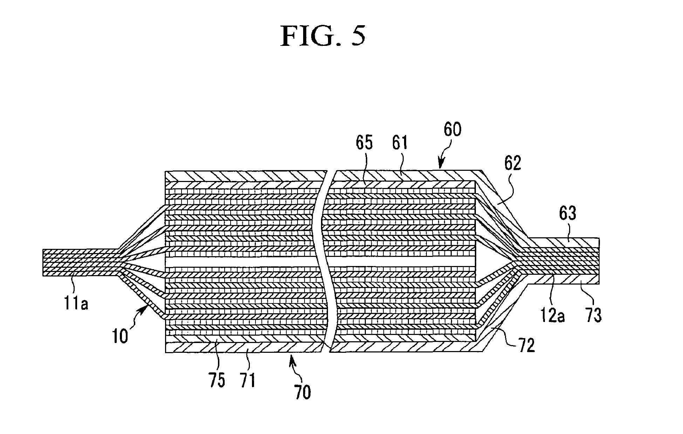

FIG. 5 is the horizontally cross-sectional view of a metal supporting plate attached to an electrode assembly according to a second embodiment of the present invention.

Referring to FIG. 5, a rechargeable battery according to the embodiment of the present invention includes a first metal supporting plate 60 attached to one side of the electrode assembly 10 and a second metal supporting plate 70 attached to the other side thereof.

According to the embodiment of the present invention, the electrode assembly 10 has the same structure as the first embodiment and thus, will not be repetitively illustrated here.

The first metal supporting plate 60 includes a f flat part 61 facing one side of the electrode assembly 10, a curving slope part 62 connected to one end of the flat part 61 and curved toward the electrode assembly 10, and a junction part 63 protruded from the curving slope part 62 and its one end. The flat part 61 may have a quadrilateral shape. An insulating film 65 is disposed between, preferably only between the flat part 61 and the electrode assembly 10. The insulating film 65 may be made of a polymer material and attached to the flat part 61.

In addition, the second metal supporting plate 70 includes a flat part 71 facing the other side of the electrode assembly 10, a curved slope part 72 connected to one end of the flat part 71 and curved toward the electrode assembly 10, and a junction part 73 protruded from one end of the curved slope part 72. The flat part 71 may have a quadrilateral shape. An insulating film 75 is disposed between, preferably only between the flat part 71 and the electrode assembly 10. The insulating film 75 may be made of a polymer material and attached to the flat part 71.

The junction part 63 of the first metal supporting plate 60 and the junction part 73 of the second metal supporting plate 70 are welded with a negative uncoated region 12a and thus, electrically connected to a negative electrode 12.

The first and second metal supporting plates 60 and 70 are made of the same material as a negative electrode current collector and in particular, copper or copper alloy.

According to the embodiment of the present invention, when the metal supporting plates 60 and 70 are disposed at both sides of the electrode assembly 10, a rechargeable battery may be safe without being fired by discharging a current inside an electrode assembly 10 even though the rechargeable battery is penetrated by a drill or something.

## Claims

1. A rechargeable battery (100) comprising:
a wound electrode assembly (10) having a positive electrode (11), a negative electrode (12) and a separator (13) interposed between the electrodes (11, 12), wherein the positive electrode (11) comprises a positive uncoated region (11 a) and the negative electrode (12) comprises a negative uncoated region (12a), the electrode assembly (10) comprising flat parts (10a) formed at its front and back sides and curved parts (10b) connect the front and back flat parts (10a) at its top and bottom faces,
a lead member (32) electrically connected to the negative electrode (12) and welded to the negative uncoated region (12a,
a case (34) for mounting the electrode assembly (10) therein; and
a cap plate (30) for covering an opening of the case (34),
**characterized in that**
a metal supporting plate (40) is provided between the case (34) and the electrode assembly (10), the metal supporting plate (40) including a flat part (41) facing one of the front flat parts (10a) of the electrode assembly (10), a curving slope part (42) formed at one end of the flat part (41) and curved toward the electrode assembly (10), and a junction part (43) formed at the end of the curving slope part (42) and electrically connected to the negative uncoated region (12a).

2. Rechargeable battery (100) according to claim 1, wherein the case (34) is electrically connected to the positive electrode (11) and insulated from the metal supporting plate (40).

3. Rechargeable battery (100) according to claim 1, wherein an insulating film (45) is provided between the the flat part (41) and the electrode assembly (10).

4. Rechargeable battery (100) according to claim 3, wherein the insulating film (45) is adhered to the flat portion (41).

5. Rechargeable battery (100) according to any of the previous claims, wherein the metal supporting plate (40) consists of the same material as the negative electrode (12).

6. Rechargeable battery (100) according to any of the previous claims, wherein the metal supporting plate (40) is made of copper or a copper alloy.

7. Rechargeable battery (100) according to any of the previous claims, wherein a first metal supporting plate (70) is formed on one side of the electrode assembly (10) and a second metal supporting plate (60) is formed on the opposing side of the electrode assembly (10) and being connected to the negative uncoated region (12a).

8. Rechargeable battery (100) according to any of the previous claims, wherein a surface area of the flat portion (41) of the metal supporting plate (40) is the same or less than a surface area of front flat part (10a) of the electrode assembly (10).

9. Rechargeable battery (100) according to claim 8, wherein the surface area of the flat portion (41) is at least 60% of the surface area of the front flat part (10a), preferably at least 80%.

## Patentansprüche

1. Wiederaufladbare Batterie (100), umfassend:
eine gewickelte Elektrodenanordnung (10) mit einer positiven Elektrode (11), einer negative Elektrode (12) und einem zwischen die Elektroden (11, 12) eingefügten Separator (13), wobei die positive Elektrode (11) einen positiven unbeschichteten Bereich (11a) umfasst und die negative Elektrode (12) einen negativen unbeschichteten Bereich (12a) umfasst, wobei die Elektrodenanordnung (10) an ihrer Vorder- und Rückseite ausgebildete flache Abschnitte (10a) sowie die vorder-und rückseitigen flachen Abschnitte (10a) an ihrer Ober- und Unterseite verbindende gewölbte Abschnitte (10b) umfasst,
ein Anschlusselement (32), das elektrisch mit der negative Elektrode (12) verbunden und mit dem negativen unbeschichteten Bereich (12a) verschweißt ist,
ein Gehäuse (34) zum Anbringen der Elektrodenanordnung (10) in diesem; und
eine Abdeckplatte (30) zum Abdecken einer Öffnung des Gehäuses (34),
**dadurch gekennzeichnet, dass**
zwischen dem Gehäuse (34) und der Elektrodenanordnung (10) eine metallische Stützplatte (40) vorgesehen ist, wobei die metallische Stützplatte (40) einen flachen Abschnitt (41), der einem der vorderseitigen flachen Abschnitte (10a) der Elektrodenanordnung (10) zugewandt ist, einen gekrümmten, abgeschrägten Abschnitt (42), der an einem Ende des flachen Abschnitts (41) ausgebildet und zur Elektrodenanordnung (10) hin gekrümmt ist, sowie einen Verbindungsabschnitt (43), der am Ende des gekrümmten, abgeschrägten Abschnitts (42) ausgebildet und elektrisch mit dem negativen unbeschichteten Bereich (12a) verbunden ist, umfasst.

2. Wiederaufladbare Batterie (100) nach Anspruch 1, wobei das Gehäuse (34) elektrisch mit der positiven Elektrode (11) verbunden und von der metallischen Stützplatte (40) isoliert ist.

3. Wiederaufladbare Batterie (100) nach Anspruch 1, wobei zwischen dem flachen Abschnitt (41) und der Elektrodenanordnung (10) ein Isolierfilm (45) vorgesehen ist.

4. Wiederaufladbare Batterie (100) nach Anspruch 3, wobei der Isolierfilm (45) an den flachen Abschnitt (41) angeklebt ist.

5. Wiederaufladbare Batterie (100) nach einem der vorstehenden Ansprüche, wobei die metallische Stützplatte (40) aus demselben Material besteht wie die negative Elektrode (12).

6. Wiederaufladbare Batterie (100) nach einem der vorstehenden Ansprüche, wobei die metallische Stützplatte (40) aus Kupfer oder einer Kupferlegierung besteht.

7. Wiederaufladbare Batterie (100) nach einem der vorstehenden Ansprüche, wobei eine erste metallische Stützplatte (70) auf einer Seite der Elektrodenanordnung (10) ausgebildet ist und eine zweite metallische Stützplatte (60) auf der gegenüberliegenden Seite der Elektrodenanordnung (10) ausgebildet und mit dem negativen unbeschichteten Bereich (12a) verbunden ist.

8. Wiederaufladbare Batterie (100) nach einem der vorstehenden Ansprüche, wobei ein Flächenbereich des flachen Abschnitts (41) der metallischen Stützplatte (40) gleich einem oder kleiner als ein Flächenbereich des vorderseitigen flachen Abschnitts (10a) der Elektrodenanordnung (10) ist.

9. Wiederaufladbare Batterie (100) nach Anspruch 8, wobei der Flächenbereich des flachen Abschnitts (41) mindestens 60% des Flächenbereichs des vorderseitigen flachen Abschnitts (10a), vorzugsweise mindestens 80% beträgt.

## Revendications

1. Batterie rechargeable (100), comprenant :
un ensemble d'électrodes enroulé (10) comportant une électrode positive (11), une électrode négative (12) et un séparateur (13) interposé entre les électrodes (11, 12), l'électrode positive (11) comprenant une région non revêtue positive (11 a) et l'électrode négative (12) comprenant une région non revêtue négative (12a), l'ensemble d'électrodes (10) comprenant des parties plates (10a) formées sur ses côtés avant et arrière et des parties incurvées (10b) reliant les parties plates avant et arrière (10a) sur ses faces supérieure et inférieure,
un élément conducteur (32) électriquement connecté à l'électrode négative (12) et soudé à la région non revêtue négative (12a),
un boîtier (34) pour monter l'ensemble d'électrodes (10) à l'intérieur de celui-ci ; et
une plaque de recouvrement (30) pour couvrir une ouverture du boîtier (34),
**caractérisée en ce que** :
une plaque de support métallique (40) est disposée entre le boîtier (34) et l'ensemble d'électrodes (10), la plaque de support métallique (40) comprenant une partie plate (41) faisant face à l'une des parties plates avant (10a) de l'ensemble d'électrodes (10), une partie en pente incurvée (42) formée à une extrémité de la partie plate (41) et incurvée vers l'ensemble d'électrodes (10), et une partie de jonction (43) formée à l'extrémité de la partie en pente incurvée (42) et électriquement connectée à la région non revêtue négative (12a).

2. Batterie rechargeable (100) selon la revendication 1, dans laquelle le boîtier (34) est électriquement connecté à l'électrode positive (11) et isolé vis-à-vis de la plaque de support métallique (40).

3. Batterie rechargeable (100) selon la revendication 1, dans laquelle un film isolant (45) est disposé entre la partie plate (41) et l'ensemble d'électrodes (10).

4. Batterie rechargeable (100) selon la revendication 3, dans laquelle le film isolant (45) adhère à la partie plate (41).

5. Batterie rechargeable (100) selon l'une quelconque des revendications précédentes, dans laquelle la plaque de support métallique (40) est constituée par le même matériau que l'électrode négative (12).

6. Batterie rechargeable (100) selon l'une quelconque des revendications précédentes, dans laquelle la plaque de support métallique (40) est réalisée en cuivre ou en un alliage de cuivre.

7. Batterie rechargeable (100) selon l'une quelconque des revendications précédentes, dans laquelle une première plaque de support métallique (70) est formée sur un côté de l'ensemble d'électrodes (10) et une deuxième plaque de support métallique (60) est formée sur le côté opposé de l'ensemble d'électrodes (10), et sont connectées à la région non revêtue négative (12a).

8. Batterie rechargeable (100) selon l'une quelconque des revendications précédentes, dans laquelle une surface de la partie plate (41) de la plaque de support métallique (40) est inférieure ou égale à une surface d'une partie plate avant (10a) de l'ensemble d'électrodes (10).

9. Batterie rechargeable (100) selon la revendication 8, dans laquelle la surface de la partie plate (41) est d'au moins 60% de la surface de la partie plate avant (10a), et de préférence d'au moins 80%.
